# EUROPÄISCHE PATENTSCHRIFT

(11) **EP 3 694 760 B1**
(45) Veröffentlichungstag und Bekanntmachung des Hinweises auf die Patenterteilung: **05.10.2022**
(21) Anmeldenummer: 17835843.8
(22) Anmeldetag: 20.12.2017
(51) Int. Cl.: B61D 17/02

(54) **VERKLEIDUNGSANORDNUNG FÜR EIN FAHRZEUG**
TRIM ASSEMBLY FOR A VEHICLE
ENSEMBLE D'HABILLAGE POUR VÉHICULE AUTOMOBILE

(43) Veröffentlichungstag der Anmeldung: 19.08.2020
(73) Patentinhaber: Siemens Mobility Austria GmbH, 1210 Wien (AT)
(72) Erfinder: CZERWINKA, Thomas, 8410 Weitendorf (AT); KREUZWEGER, David, 8501 Lieboch (AT); MOSER, Christian, 8042 Graz (AT); PRIX, Alexander, 8010 Graz (AT); RINGSWIRTH, Jochen, 8680 Ganz/Mürzzuschlag (AT)
(74) Vertreter: Deffner, Rolf
(86) Internationale Anmeldenummer: PCT/EP2017/083775
(87) Internationale Veröffentlichungsnummer: WO 2019/120508

(56) Entgegenhaltungen:
- DE-A1-102013 018 714
- JP-A- H11 189 154
- KR-U- 20090 002 803

## Beschreibung

Die Erfindung betrifft eine Verkleidungsanordnung mit zumindest einem Verkleidungsteil für ein Fahrzeug, wobei das Verkleidungsteil zumindest eine Lagervorrichtung aufweist.

Zur Erzielung eines geringen Luftwiderstands weisen Fahrzeuge, Fahrwerke, Dächer bzw. Dachaufbauten von Fahrzeugen etc. (z.B. Schienenfahrzeuge, Drehgestelle und Dächer von Schienenfahrzeugen etc.) häufig aerodynamisch geformte Verkleidungen auf. Ein geringer Luftwiderstand ist insbesondere bei hohen Fahrgeschwindigkeiten wichtig, um Energiebedarf bzw. Bedarf an Antriebsleistung und/oder Treibstoffverbrauch des Fahrzeugs möglichst gering zu halten.

Nach dem Stand der Technik beschreibt beispielsweise die WO 2014/206643 A1 ein verkleidetes Fahrwerk für ein Schienenfahrzeug. Seitlich an dem Fahrwerk bzw. längs des Schienenfahrzeugs sind Seitenteile der Verkleidung angeordnet. An einer Fahrwerksunterseite ist ein Bodenteil vorgesehen. Die Seitenteile sind mit einem Wagenkasten des Schienenfahrzeugs verbunden, das Bodenteil mit dem Fahrwerk. Zwischen den Seitenelementen und dem Bodenelement ist ein Spalt vorgesehen, wodurch ein Ausdrehen von Rädern ermöglicht wird.

Weiterhin ist die DE 10 2009 006 562 A1 bekannt, in der eine Verkleidung für ein Fahrwerk eines Schienenfahrzeugs bzw. ein Schienenfahrzeug mit verkleidetem Fahrwerk offenbart ist. Die Verkleidung umfasst eine das Fahrwerk umschließende Wand sowie einen Unterboden. Der Unterboden ist über Befestigungsmittel mit dem Fahrwerk verbunden.

Ferner offenbart die JP H11-189154 A eine Befestigungsvorrichtung für ein Abdeckmittel einer unterflur angeordneten Komponente eines Fahrzeugs. Das Abdeckmittel wird mittels einer ersten Schraube in eine definierte Befestigungsposition gebracht und darin gehalten. Eine Befestigung des Abdeckmittels kann dann mittels einer zweiten Schraube durchgeführt werden.

Darüber hinaus ist die KR 2009 0002803 U bekannt, in welcher eine Vorrichtung eines Fahrzeugs gezeigt ist, über welche ein Fahrzeugpaneel mit einem Fahrzeugdach verbunden ist, wobei ein Träger über eine Befestigungsschraube mit einem Profil einer Innenraumverkleidung des Fahrzeugs verschraubt ist.

Weiterhin ist in der DE 10 2013 018 714 A1 eine Vorrichtung für ein Fahrzeug gezeigt, mit der ein Verkleidungsteil an einem Fahrzeug befestigt werden kann. Zur Montagevereinfachung sind zwischen einem Träger des Fahrzeugs und dem Verkleidungsteil ein Pufferelement und ein Aufsatzelement angeordnet, welche miteinander flexibel gekoppelt sind.

Die genannten Ansätze weisen in ihren bekannten Formen den Nachteil auf, dass keine Redundanzen bzw. spezifische Fangvorrichtungen zur Verliersicherung der Verkleidung offenbart sind.

Der Erfindung liegt daher die Aufgabe zugrunde, eine gegenüber dem Stand der Technik weiterentwickelte Verkleidungsanordnung anzugeben.

Erfindungsgemäß wird diese Aufgabe gelöst mit einer Verkleidungsanordnung mit den technischen Merkmalen des Anspruchs 1

Aufgrund der Notfangvorrichtung wird eine Redundanz zu der Lagervorrichtung und somit eine hohe Verliersicherheit der Verkleidungsanordnung erzielt. Weiterhin ermöglichen der erste Fangbolzen und das erste Distanzstück bzw. deren spezifische Ausgestaltungen und Anordnungen eine einfache Montage und Demontage des Verkleidungsteils. Dadurch wird eine Reduktion von Wartungs- und Instandhaltungskosten erzielt.

Der erste Träger fungiert als Lager für den ersten Fangbolzen und das erste Distanzstück, d.h. der erste Fangbolzen und das erste Distanzstück sind nicht unmittelbar mit dem Verkleidungsteil, sondern mit dem ersten Träger verbunden. Dadurch wird eine hohe Stabilität der Notfangvorrichtung erzielt. Zusätzlich zu seiner Funktion als Lager für den ersten Fangbolzen und das erste Distanzstück kann der erste Träger als Aufnahme für weitere Komponenten fungieren.

Es ist günstig, wenn das zumindest eine Verkleidungsteil zumindest eine erste Klappe aufweist.

Durch diese Maßnahme wird eine einfache Zugänglichkeit von hinter dem Verkleidungsteil mit dem Fahrzeug verbundenen Komponenten zu Wartungs- und Instandhaltungszwecken erzielt.

Eine vorteilhafte Lösung erhält man, wenn die zumindest erste Klappe um eine parallel zu einer Fahrwerks-Längsachse des Fahrzeugs verlaufende erste Achse drehbar gelagert ist. Durch diese Maßnahme wird verhindert, dass die erste Klappe in geöffnetem Zustand eine Betretbarkeit oder Befahrbarkeit einer unter einem Gleis, in Gleislängsrichtung verlaufenden Wartungsgrube erschwert, da die erste Klappe in diesem längs zu der Wartungsgrube ausgerichtet ist bzw. seitlich nach unten ragt.

Eine günstige Lösung wird erzielt, wenn die zumindest erste Notfangvorrichtung mittels zumindest eines, auf dem zumindest einen Verkleidungsteil angeordneten, ersten Verschlusses mit dem zumindest einen Verkleidungsteil koppelbar ausgeführt ist.

Durch diese Maßnahme wird erreicht, dass die erste Notfangvorrichtung zusätzlich zu ihrer Haltefunktion auch eine Verriegelungsfunktion ausführt, wodurch die erste Klappe und/oder das Verkleidungsteil einfach entriegelt und geöffnet bzw. von dem Schienenfahrzeug gelöst sowie geschlossen bzw. mit dem Schienenfahrzeug verbunden und verriegelt werden können.

Es ist weiterhin günstig, wenn der zumindest erste Verschluss eine erste Schlossfalle aufweist.

Dabei ist es auch vorteilhaft, wenn der zumindest erste Träger zumindest eine Verschluss-Ausnehmung aufweist.

Durch diese Maßnahmen wird erreicht, dass die erste Klappe und/oder das Verkleidungsteil ähnlich einem Türblatt einer Gebäudetür mittels Schnappverschluss verriegelt bzw. entriegelt werden können. Zur Verriegelung muss lediglich die erste Klappe und/oder das Verkleidungsteil geschlossen werden und die erste Schlossfalle muss in die Verschluss-Ausnehmung einrasten. Somit wird eine einfache Verriegelung der ersten Klappe und/oder des Verkleidungsteils erzielt, die auch von einer Wartungsgrube aus erfolgen kann.

Eine vorteilhafte Lösung erhält man, wenn das zumindest eine Verkleidungsteil im Bereich des zumindest ersten Verschlusses eine Öffnung aufweist.

Durch diese Maßnahme wird eine leichte Zugänglichkeit des ersten Verschlusses bewirkt. Zum Öffnen des ersten Verschlusses bzw. zur Entriegelung der ersten Klappe und/oder des Verkleidungsteils muss lediglich ein Werkzeug bzw. ein Schlüssel in die Öffnung eingeführt werden und die erste Schlossfalle oder ein Verschlussbolzen einer

Bolzenverriegelung betätigt werden. Somit wird eine einfache Entriegelung der ersten Klappe und/oder des Verkleidungsteils erzielt, die auch von einer Wartungsgrube aus erfolgen kann. Es ist günstig, wenn das zumindest erste Distanzstück als elastischer Puffer ausgebildet ist.

Durch diese Maßnahme wird eine schwingungstechnische Entkopplung der Verkleidungsanordnung von dem Fahrzeug bzw. eine dämpfende Wirkung erzielt und somit Beschädigungen der Verkleidungsanordnung aufgrund von dem Fahrzeug auf die Verkleidungsanordnung übertragener Kräfte und Momente vermieden.

Nachfolgend wird die Erfindung anhand von Ausführungsbeispielen näher erläutert.

Es zeigen beispielhaft:
- Fig. 1:: Eine Seitenansicht eines Ausschnitts aus einem Fahrwerk eines Schienenfahrzeugs mit einer ersten beispielhaften Ausführungsvariante einer Verkleidungsanordnung mit einer ersten Notfangvorrichtung.
- Fig. 2:: Eine zweite beispielhafte Ausführungsvariante einer erfindungsgemäßen Verkleidungsanordnung mit einem Verkleidungsteil, das eine erste Klappe und eine zweite Klappe aufweist sowie mit einer ersten Notfangvorrichtung sowie weiteren Notfangvorrichtungen, und
- Fig. 3:: Eine Detailansicht der zweiten beispielhaften Ausführungsvariante einer erfindungsgemäßen Verkleidungsanordnung mit einer ersten Notfangvorrichtung sowie einem ersten Verschluss und einem zweiten Verschluss.

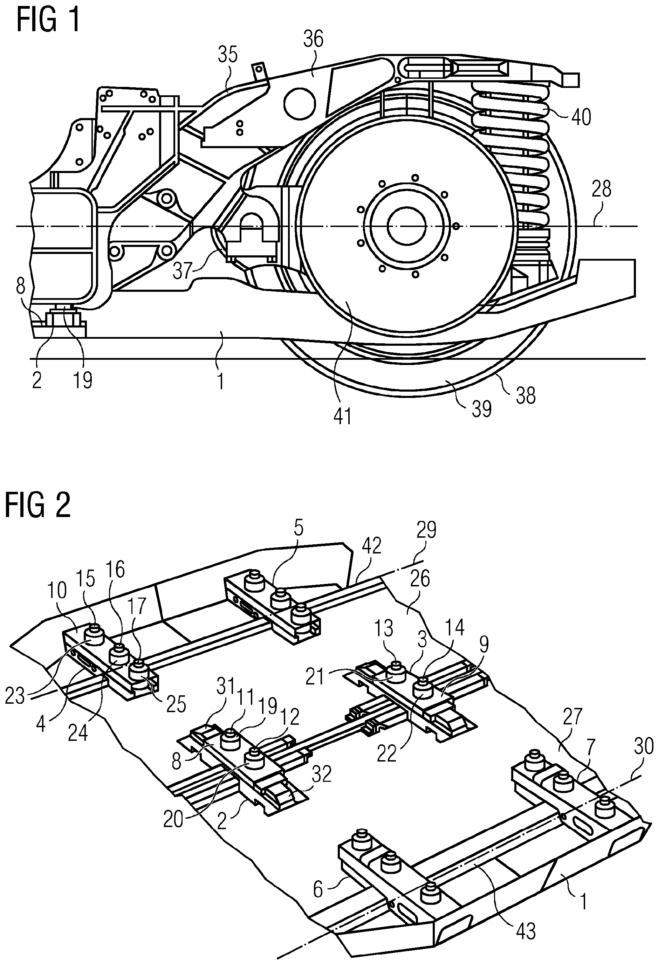

Ein in Fig. 1 in Seitenansicht dargestellter Ausschnitt eines Fahrwerks 35 eines Schienenfahrzeugs weist einen Fahrwerksrahmen 36 sowie einen ersten Radsatz 38 mit einem ersten Rad 39 sowie mit einem in Fig. 1 nicht sichtbaren zweiten Rad auf. Zwischen dem Fahrwerksrahmen 36 und dem ersten Radatz 38 sind eine erste Radsatzlagervorrichtung 37 und eine in Fig. 1 nicht sichtbare zweite Radsatzlagervorrichtung sowie eine erste Primärfeder 40 und eine nicht sichtbare zweite Primärfeder vorgesehen. Mit dem ersten Radsatz 38 ist eine erste Antriebseinheit 41 verbunden.

Das Fahrwerk 35 weist einen nicht dargestellten, hinsichtlich seiner konstruktiven und funktionalen Eigenschaften gleich wie der erste Radsatz 38 ausgeführten zweiten Radsatz auf.

Der zweite Radsatz ist mittels einer dritten Radsatzlagervorrichtung und einer vierten Radsatzlagervorrichtung sowie einer dritten Primärfeder und einer vierten Primärfeder, die ebenfalls nicht dargestellt sind, an den Fahrwerksrahmen 36 gekoppelt. Mit dem zweiten Radsatz ist eine nicht gezeigte zweite Antriebseinheit verbunden.

Das Fahrwerk 35 weist eine erste beispielhafte Ausführungsvariante einer erfindungsgemäßen Verkleidungsanordnung mit einem Verkleidungsteil 1 auf. Das Verkleidungsteil 1 ist an einer Unterseite des Fahrwerks 35 angeordnet, annähernd parallel zu einer Fahrwerks-Längsachse 28 ausgerichtet und aerodynamisch geformt.

Erfindungsgemäß ist es auch vorstellbar, dass die Verkleidungsanordnung mehrere Elemente umfasst. Beispielsweise können neben einem Bodenelement auch Seitenelemente zur Verkleidung von Fahrwerksseitenteilen vorgesehen sein.

Weiterhin ist es denkbar, dass die Verkleidungsanordnung nicht bzw. nicht nur unter dem Fahrwerk 35 sondern beispielsweise auch unter einem nicht gezeigten Wagenkasten des Schienenfahrzeugs angeordnet ist.

Das Verkleidungsteil 1 ist über nicht dargestellte Lagervorrichtungen an das Fahrwerk 35 gekoppelt. Mit dem Verkleidungsteil 1 ist eine erste Notfangvorrichtung 2 verbunden, welche einen ersten Träger 8, einen in Fig. 1 nicht gezeigten ersten Fangbolzen 11 mit einer Kontaktfläche 18 sowie ein erstes Distanzstück 19 aufweist.

Der erste Fangbolzen 11 und das erste Distanzstück 19 sind mit dem ersten Träger 8 verschraubt.

Die Kontaktfläche 18 des ersten Fangbolzens 11 ist dem Verkleidungsteil 1 zugewandt. Der erste Fangbolzen 11 ragt in eine Ausnehmung einer Unterseite des Fahrwerksrahmens 36. Ein Profilabschnitt des Fahrwerksrahmens 36 ist zwischen der Kontaktfläche 18 und dem ersten Distanzstück 19 angeordnet. Versagt die Lagervorrichtung oder wird diese während eines Demontagevorgangs des Verkleidungsteils 1 gelöst, so hängt das Verkleidungsteil 1 über den ersten Fangbolzen 11 der ersten Notfangvorrichtung 2 bzw. dessen Kontaktfläche 18 an dem Fahrwerksrahmen 36. Ein Herunterfallen des Verkleidungsteils 1 ist somit verhindert.

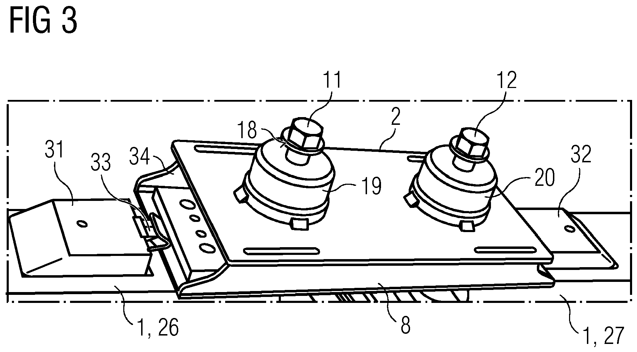

Soll das Verkleidungsteil 1 von dem Fahrwerk 35 gelöst werden, so müssen ein erster Verschluss 31 und ein zweiter Verschluss 32, die in Fig. 2 und Fig. 3 gezeigt sind, entriegelt und so das Verkleidungsteil 1 von der ersten Notfangvorrichtung 2 gelöst werden.

Zur Montage des Verkleidungsteils 1 wird dieses zunächst mit der ersten Notfangvorrichtung 2 verbunden bzw. über den ersten Verschluss 31 und den zweiten Verschluss 32 verriegelt. Somit hängt das Verkleidungsteil 1 zunächst über die Kontaktfläche 18 des ersten Fangbolzens 11 und den Profilabschnitt des Fahrwerksrahmens 36 an dem Fahrwerk 35. Dann wird die Lagervorrichtung der Verkleidungsanordnung mit dem Fahrwerk 35 arretiert, wodurch die erste Notfangvorrichtung 2 bzw. der erste Fangbolzen 11 entlastet wird und das Verkleidungsteil 1 über die Lagervorrichtung an dem Fahrwerk 35 hängt.

Fig. 2 offenbart eine zweite beispielhafte Ausführungsvariante einer erfindungsgemäßen Verkleidungsanordnung mit einem Verkleidungsteil 1, das eine erste Klappe 26 und eine zweite Klappe 27 aufweist.

Das Verkleidungsteil 1 ist, wie im Zusammenhang mit Fig. 1 beschrieben, mittels einer nicht dargestellten Lagervorrichtung mit einem in Fig. 2 nicht gezeigten Fahrwerk 35 eines Schienenfahrzeugs verbunden.

Die Verkleidungsanordnung weist weiterhin eine erste Notfangvorrichtung 2, eine zweite Notfangvorrichtung 3, eine dritte Notfangvorrichtung 4, eine vierte Notfangvorrichtung 5, eine fünfte Notfangvorrichtung 6 sowie eine sechste Notfangvorrichtung 7 auf. Mit einem ersten Träger 8 der ersten Notfangvorrichtung 2 sind ein erster Fangbolzen 11 und ein zweiter Fangbolzen 12 sowie ein erstes Distanzstück 19 und ein zweites Distanzstück 20 verschraubt, mit einem zweiten Träger 9 der zweiten Notfangvorrichtung 3 ein dritter Fangbolzen 13 und ein vierter Fangbolzen 14 sowie ein drittes Distanzstück 21 und ein viertes Distanzstück 22 sowie mit einem dritten Träger 10 der dritten Notfangvorrichtung 4 ein fünfter Fangbolzen 15, ein sechster Fangbolzen 16 und ein siebenter Fangbolzen 17 sowie ein fünftes Distanzstück 23, ein sechstes Distanzstück 24 und ein siebentes Distanzstück 25.

Die vierte Notfangvorrichtung 5, die fünfte Notfangvorrichtung 6 sowie die sechste Notfangvorrichtung 7 sind hinsichtlich konstruktiver und funktionaler Eigenschaften gleich wie die dritte Notfangvorrichtung 4 ausgebildet und weisen entsprechend weitere Träger, weitere Fangbolzen und weitere Distanzstücke auf.

Zwischen dem ersten Fangbolzen 11, dem zweiten Fangbolzen 12, dem dritten Fangbolzen 13, dem vierten Fangbolzen 14, dem fünften Fangbolzen 15, dem sechsten Fangbolzen 16, dem siebenten Fangbolzen 17 und den weiteren Fangbolzen einerseits sowie dem ersten Distanzstück 19, dem zweiten Distanzstück 20, dem dritten Distanzstück 21, dem vierten Distanzstück 22, dem fünften Distanzstück 23, dem sechsten Distanzstück 24, dem siebenten Distanzstück 25 und den weiteren Distanzstücken andererseits ist ein Profilabschnitt einer nicht gezeigten Konsole, die mit einem in Fig. 2 nicht dargestellten Fahrwerksrahmen 36 des Fahrwerks 35 verbunden ist, angeordnet.

Versagt die Lagervorrichtung (z.B. durch Bruch) oder wird diese zwecks Demontage des Verkleidungsteils 1 gelöst, so hängt, wie, bezogen auf eine erste beispielhafte Ausführungsvariante einer erfindungsgemäßen Verkleidungsanordnung auch im Zusammenhang mit Fig. 1 beschrieben, das Verkleidungsteil 1 über den ersten Fangbolzen 11, den zweiten Fangbolzen 12, den dritten Fangbolzen 13, den vierten Fangbolzen 14, den fünften Fangbolzen 15, den sechsten Fangbolzen 16, den siebenten Fangbolzen 17 sowie über die weiteren Fangbolzen an dem Fahrwerksrahmen 36 und ist vor einem Herabfallen geschützt.

Der erste Träger 8 der ersten Notfangvorrichtung 2 ist über einen ersten Verschluss 31 und einen zweiten Verschluss 32, die im Zusammenhang mit Fig. 3 detailliert beschrieben sind, an das Verkleidungsteil 1 gekoppelt.

Über den ersten Verschluss 31 ist der erste Träger 8 an die erste Klappe 26 gekoppelt, über den zweiten Verschluss 32 an die zweite Klappe 27.

Der zweite Träger 9 ist mit weiteren Verschlüssen gekoppelt, die hinsichtlich konstruktiver und funktionaler Eigenschaften gleich wie der erste Verschluss 31 und der zweite Verschluss 32 ausgeführt sind.

Der erste Träger 8 und der zweite Träger 9 weisen somit neben ihrer Tragefunktion für den ersten Fangbolzen 11, den zweiten Fangbolzen 12, den dritten Fangbolzen 13 und den vierten Fangbolzen 14 sowie das erste Distanzstück 19, das zweite Distanzstück 20, das dritte Distanzstück 21 und das vierte Distanzstück 22 auch eine Verschlussfunktion bezüglich der ersten Klappe 26 und der zweiten Klappe 27 auf.

Werden der erste Verschluss 31, der zweite Verschluss 32 und die weiteren Verschlüsse, wie im Zusammenhang mit Fig. 1 und Fig. 3 beschrieben, geöffnet, so schwingen die erste Klappe 26 und die zweite Klappe 27 nach unten auf und Fahrwerkskomponenten, welche oberhalb der Verkleidungsanordnung angeordnet sind, werden zugänglich. Selbstverständlich ist es auch möglich, entweder nur die erste Klappe 26 oder nur die zweite Klappe 27 zu öffnen.

Die erste Klappe 26 ist bezüglich einer ersten Achse 29 über ein erstes Scharnier 42 und die zweite Klappe 27 bezüglich einer zweiten Achse 30 über ein zweites Scharnier 43 drehbar auf dem Verkleidungsteil 1 gelagert. In einem geöffneten Zustand der ersten Klappe 26 bzw. der zweiten Klappe 27 ragt diese seitlich an dem Fahrwerk 35 nach unten, da die erste Achse 29 und die zweite Achse 30 parallel zu einer in Fig. 1 gezeigten Fahrwerks-Längsachse 28 ausgerichtet sind.

Steht das Schienenfahrzeug auf einem Gleis über einer Wartungsgrube, die nicht gezeigt sind, so ist diese auch bei geöffneter erster Klappe 26 bzw. zweiter Klappe 27 begehbar oder befahrbar, d.h. die Wartungsgrube wird nicht durch die erste Klappe 26 bzw. die zweite Klappe 27 versperrt bzw. blockiert.

Das Verkleidungsteil 1 umfasst die erste Klappe 26 und die zweite Klappe 27, wobei es sich um eine günstige Lösung handelt. Erfindungsgemäß ist es jedoch auch vorstellbar, nur die erste Klappe 26 oder mehr Klappen als die erste Klappe 26 und die zweite Klappe 27 vorzusehen.

Ist nur die erste Klappe 26 angeordnet, so sind der erste Träger 8 und der zweite Träger 9 fest mit jenem Bereich des Verkleidungsteils 1 verbunden, der nicht aufklappbar ausgeführt ist.

Der dritte Träger 10 und die weiteren Träger sind in nicht aufklappbaren Bereichen des Verkleidungsteils 1 fest mit dem Verkleidungsteil 1 verbunden bzw. verschweißt und weisen demnach keine Verschlussfunktion auf.

In Bereichen des ersten Scharniers 42 und des zweiten Scharniers 43 sowie zwischen der ersten Klappe 26 und der zweiten Klappe 27 sind nicht gezeigte Dichtungen vorgesehen, wodurch Fahrzeugkomponenten, welche oberhalb der Verkleidungsanordnung angeordnet sind, bei geschlossener erster Klappe 26 und geschlossener zweiter Klappe 27 vor Umgebungseinflüssen wie Regen, Schnee, Feuchtigkeit und Partikel etc. geschützt sind.

In Fig. 3 ist ein Detail der in Fig. 2 gezeigten, zweiten beispielhaften Ausführungsvariante einer erfindungsgemäßen Verkleidungsanordnung eines Fahrzeugs mit einem Verkleidungsteil 1, einer ersten Notfangvorrichtung 2 sowie einem ersten Verschluss 31 und einem zweiten Verschluss 32 dargestellt.

Die erste Notfangvorrichtung 2 weist einen ersten Träger 8 auf, mit dem ein erster Fangbolzen 11 und ein erstes Distanzstück 19 sowie ein zweiter Fangbolzen 12 und ein zweites Distanzstück 20 verschraubt sind. Das erste Distanzstück 19 und das zweite Distanzstück 20 sind als zylindrische elastische Puffer ausgeführt.

Dadurch ist die Verkleidungsanordnung in vorteilhafter Weise von dem Fahrzeug bzw. von Fahrzeugkomponenten, mit welchen das Verkleidungsteil 1 verbunden ist, mechanisch bzw. schwingungstechnisch entkoppelt, wodurch Beschädigungen vermieden werden.

Das erste Distanzstück 19 ist um den ersten Fangbolzen 11, das zweite Distanzstück 20 um den zweiten Fangbolzen 12 herum angeordnet.

Der erste Fangbolzen 11 weist einen Schraubenkopf auf, der auf einer dem ersten Träger 8 bzw. dem Verkleidungsteil 1 zugewandten Seite eine Kontaktfläche 18, deren Funktion im Zusammenhang mit Fig. 1 beschrieben ist, umfasst. Der zweite Fangbolzen 12 ist hinsichtlich konstruktiver und funktionaler Eigenschaften gleich wie der erste Fangbolzen 11 ausgebildet. Zwischen dem ersten Fangbolzen 11 und dem ersten Distanzstück 19 einerseits und dem zweiten Fangbolzen 12 und dem zweiten Distanzstück 20 andererseits ist ein Profilabschnitt eines in Fig. 1 gezeigten Fahrwerksrahmens 36 angeordnet, wodurch das Verkleidungsteil 1 und die erste Notfangvorrichtung 2 vor einem unbeabsichtigten Lösen bzw. Herabfallen gesichert sind. Versagt eine nicht dargestellte, zwischen einem in Fig. 1 gezeigten Fahrwerk 35 und dem Verkleidungsteil 1 angeordnete Lagervorrichtung oder wird diese gelöst, so hängt das Verkleidungsteil 1 über die erste Notfangvorrichtung 2 bzw. den ersten Fangbolzen 11 und den zweiten Fangbolzen 12 an dem Fahrwerksrahmen 36.

Der erste Träger 8 ist über den ersten Verschluss 31 und den zweiten Verschluss 32 an das Verkleidungsteil 1 gekoppelt. Das Verkleidungsteil 1 weist eine erste Klappe 26 und eine zweite Klappe 27 auf, deren Funktion im Zusammenhang mit Fig. 2 beschrieben ist.

Der erste Verschluss 31 ist auf der ersten Klappe 26 angeordnet, der zweite Verschluss 32 auf der zweiten Klappe 27.

Der erste Verschluss 26 weist eine erste Schlossfalle 33 auf, der zweite Verschluss 32 eine in Fig. 3 nicht sichtbare zweite Schlossfalle.

Die erste Schlossfalle 33 und die zweite Schlossfalle sind in eine Verschluss-Ausnehmung 34 des ersten Trägers 8 eingerastet. Der erste Verschluss 31 und der zweite Verschluss 32 sind somit verriegelt.

Die Verschluss-Ausnehmung 34 ist hinsichtlich ihrer Funktion ähnlich wie ein Schließblech eines Türblatts einer Gebäudetür ausgeführt.

Zur Entriegelung bzw. zum Öffnen der ersten Klappe 26 wird ein Werkzeug bzw. ein Schlüssel in eine nicht gezeigte erste Ausnehmung bzw. Öffnung, welche auf einer dem ersten Träger 8 abgewandten Seite der ersten Klappe 26 im Bereich des ersten Verschlusses 31 vorgesehen ist, eingeführt und der erste Verschluss 31 bzw. die erste Schlossfalle 33 betätigt, so dass diese aus der Verschluss-Ausnehmung 34 gleitet und die erste Klappe 26 freigibt. Somit ist der erste Verschluss 31 von dem ersten Träger 8 getrennt und die erste Klappe 26 kann geöffnet werden.

Zur Entriegelung bzw. zum Öffnen der zweiten Klappe 27 wird das Werkzeug bzw. der Schlüssel in eine nicht gezeigte zweite Ausnehmung bzw. Öffnung, welche auf einer dem ersten Träger 8 abgewandten Seite der zweiten Klappe 27 im Bereich des zweiten Verschlusses 32 vorgesehen ist, eingeführt und der zweite Verschluss 32 bzw. die zweite Schlossfalle betätigt, so dass diese aus der Verschluss-Ausnehmung 34 gleitet und die zweite Klappe 27 freigibt. Somit ist der zweite Verschluss 32 von dem ersten Träger 8 getrennt und die zweite Klappe 27 kann geöffnet werden.

Für eine Verriegelung der ersten Klappe 26 bzw. der zweiten Klappe 27 wird die erste Klappe 26 bzw. die zweite Klappe 27 geschlossen, wodurch die erste Schlossfalle 33 bzw. die zweite Schlossfalle automatisch in die Verschluss-Ausnehmung 34 des ersten Trägers 8 einrastet, da die erste Schlossfalle 33 federnd in dem ersten Verschluss 31 und die zweite Schlossfalle federnd in dem zweiten Verschluss 32 gelagert ist.

Die erste Klappe 26 bzw. die zweite Klappe 27 ist nach Einrasten der ersten Schlossfalle 33 in den ersten Verschluss 31 bzw. der zweiten Schlossfalle in den zweiten Verschluss 32 verriegelt.

Erfindungsgemäß ist es auch denkbar, statt der ersten Schlossfalle 33 bzw. der zweiten Schlossfalle eine Bolzenverriegelung mit einem ersten Verschlussbolzen und einem zweiten Verschlussbolzen vorzusehen. Der erste Verschlussbolzen ist in dem ersten Verschluss 31, der zweite Verschlussbolzen in dem zweiten Verschluss 32 gelagert. Der erste Verschlussbolzen und der zweite Verschlussbolzen können zwecks Verriegelung der ersten Klappe 26 bzw. der zweiten Klappe 27 in die Verschluss-Ausnehmung 34 des ersten Trägers 8 einrasten.

### Liste der Bezeichnungen

- 1: Verkleidungsteil
- 2: Erste Notfangvorrichtung
- 3: Zweite Notfangvorrichtung
- 4: Dritte Notfangvorrichtung
- 5: Vierte Notfangvorrichtung
- 6: Fünfte Notfangvorrichtung
- 7: Sechste Notfangvorrichtung
- 8: Erster Träger
- 9: Zweiter Träger
- 10: Dritter Träger
- 11: Erster Fangbolzen
- 12: Zweiter Fangbolzen
- 13: Dritter Fangbolzen
- 14: Vierter Fangbolzen
- 15: Fünfter Fangbolzen
- 16: Sechster Fangbolzen
- 17: Siebenter Fangbolzen
- 18: Kontaktfläche
- 19: Erstes Distanzstück
- 20: Zweites Distanzstück
- 21: Drittes Distanzstück
- 22: Viertes Distanzstück
- 23: Fünftes Distanzstück
- 24: Sechstes Distanzstück
- 25: Siebentes Distanzstück
- 26: Erste Klappe
- 27: Zweite Klappe
- 28: Fahrwerks-Längsachse
- 29: Erste Achse
- 30: Zweite Achse
- 31: Erster Verschluss
- 32: Zweiter Verschluss
- 33: Erste Schlossfalle
- 34: Verschluss-Ausnehmung
- 35: Fahrwerk
- 36: Fahrwerksrahmen
- 37: Erste Radsatzlagervorrichtung
- 38: Erster Radsatz
- 39: Erstes Rad
- 40: Erste Primärfeder
- 41: Erste Antriebseinheit
- 42: Erstes Scharnier
- 43: Zweites Scharnier

## Patentansprüche

1. Verkleidungsanordnung aufweisend zumindest eine erste Notfangvorrichtung (2) mit einem ersten Träger (8), mit zumindest einem Verkleidungsteil (1) für ein Fahrzeug, wobei das Verkleidungsteil (1) zumindest eine Lagervorrichtung aufweist und über die zumindest eine Lagervorrichtung an einem Fahrwerk (35) des Fahrzeugs koppelbar ist, wobei die zumindest erste Notfangvorrichtung (2) zumindest einen ersten Fangbolzen (11), welcher einen Schraubenkopf mit einer dem zumindest einen Verkleidungsteil (1) zugewandten Kontaktfläche (18) aufweist, und zumindest ein erstes Distanzstück (19) aufweist, und wobei der zumindest erste Fangbolzen (11) und das zumindest erste Distanzstück (19) mit dem ersten Träger (8) verbunden sind, wobei das zumindest eine Verkleidungsteil (1) über die Kontaktfläche (18) an dem Fahrwerksrahmen (36) hängt, wenn das Verkleidungsteil (1) an einer Unterseite des Fahrwerks (35) angeordnet ist und die zumindest eine Lagervorrichtung versagt oder gelöst wird.

2. Verkleidungsanordnung nach Anspruch 1, **dadurch gekennzeichnet, dass** das zumindest eine Verkleidungsteil (1) zumindest eine erste Klappe (26) aufweist.

3. Verkleidungsanordnung nach Anspruch 2, **dadurch gekennzeichnet, dass** die zumindest erste Klappe (26), wenn das Verkleidungsteil (1) an einer Unterseite des Fahrwerks (35) angeordnet ist, um eine parallel zur Fahrwerks-Längsachse (28) des Fahrzeugs verlaufende erste Achse (29) drehbar gelagert ist.

4. Verkleidungsanordnung nach einem der Ansprüche 1, 2 oder 3, **dadurch gekennzeichnet, dass** die zumindest erste Notfangvorrichtung (2) mit dem zumindest einen Verkleidungsteil (1) verbunden ist.

5. Verkleidungsanordnung nach einem der Ansprüche 1, 2 oder 3, **dadurch gekennzeichnet, dass** die zumindest erste Notfangvorrichtung (2) mittels zumindest eines, auf dem zumindest einen Verkleidungsteil (1) angeordneten, ersten Verschlusses (31) mit dem zumindest einen Verkleidungsteil (1) koppelbar ausgeführt ist.

6. Verkleidungsanordnung nach Anspruch 5, **dadurch gekennzeichnet, dass** der zumindest erste Verschluss (31) eine erste Schlossfalle (33) aufweist.

7. Verkleidungsanordnung nach Anspruch 5, **dadurch gekennzeichnet, dass** der zumindest erste Verschluss (31) als Bolzenverriegelung mit einem Verschlussbolzen ausgeführt ist.

8. Verkleidungsanordnung nach einem der Ansprüche 5, 6 oder 7, **dadurch gekennzeichnet, dass** der erste Träger (8) zumindest eine Verschluss-Ausnehmung (34) aufweist.

9. Verkleidungsanordnung nach einem der Ansprüche 5, 6, 7 oder 8, **dadurch gekennzeichnet, dass** das zumindest eine Verkleidungsteil (1) im Bereich des zumindest ersten Verschlusses (31) eine Öffnung aufweist.

10. Verkleidungsanordnung nach einem der Ansprüche 1, 2, 3, 4, 5, 6, 7, 8 oder 9, **dadurch gekennzeichnet, dass** das zumindest erste Distanzstück (19) als elastischer Puffer ausgebildet ist.

11. Fahrzeug mit einer Verkleidungsanordnung nach einem der Ansprüche 1, 2, 3, 4, 5, 6, 7, 8, 9 oder 10, **dadurch gekennzeichnet, dass** das zumindest eine Verkleidungsteil (1) mittels der zumindest einen Lagervorrichtung mit einem Fahrwerk (35) des Fahrzeugs verbunden ist.

12. Fahrzeug mit einer Verkleidungsanordnung nach einem der Ansprüche 1, 2, 3, 4, 5, 6, 7, 8, 9 oder 10 oder Fahrzeug nach Anspruch 11, **dadurch gekennzeichnet, dass** das zumindest eine Verkleidungsteil (1) mittels der zumindest ersten Notfangvorrichtung (2) mit dem Fahrwerk (35) des Fahrzeugs verbunden ist.

## Claims

1. Trim assembly having at least one first emergency catch device (2) having a first support (8), having at least one trim part (1) for a vehicle, wherein the trim part (1) has at least one bearing device and can be coupled to a chassis (35) of the vehicle by means of the at least one bearing device, wherein the at least first emergency catch device (2) has at least one first catch bolt (11) which has a screw head with a contact surface (18) facing toward the at least one trim part (1) and at least one first spacer (19), and wherein the at least first catch bolt (11) and the at least first spacer (19) are connected to the first support (8), wherein the at least one trim part (1) is attached to the chassis frame (36) by way of the contact surface (18) when the trim part (1) is arranged on a lower side of the chassis (35) and the at least one bearing device is broken down or detached.

2. Trim assembly according to claim 1, **characterised in that** the at least one trim part (1) has at least one first flap (26) .

3. Trim assembly according to claim 2, **characterised in that** when the trim part (1) is arranged on a lower side of the chassis (35), the at least first flap (26) is mounted rotatably about a first axis (29) running parallel to the chassis longitudinal axis (28) of the vehicle.

4. Trim assembly according to one of claims 1, 2 or 3, **characterised in that** the at least first emergency catch device (2) is connected to the at least one trim part (1).

5. Trim assembly according to one of claims 1, 2 or 3, **characterised in that** the at least first emergency catch device (2) is embodied so that it can be coupled to the at least one trim part (1) by means of at least one first closure (31) arranged on the at least one trim part (1).

6. Trim assembly according to claim 5, **characterised in that** the at least first closure (31) has a first lock catch (33).

7. Trim assembly according to claim 5, **characterised in that** the at least first closure (31) is embodied as a bolt lock with a locking stud.

8. Trim assembly according to one of claims 5, 6 or 7, **characterised in that** the first support (8) has at least one closure cut-out (34).

9. Trim assembly according to one of claims 5, 6, 7 or 8, **characterised in that** the at least one trim part (1) has an opening in the region of the at least first closure (31).

10. Trim assembly according to one of claims 1, 2, 3, 4, 5, 6, 7, 8 or 9, **characterised in that** the at least first spacer (19) is embodied as an elastic buffer.

11. Vehicle with a trim assembly according to one of claims 1, 2, 3, 4, 5, 6, 7, 8, 9 or 10, **characterised in that** the at least one trim part (1) is connected to a chassis (35) of the vehicle by means of the at least one bearing device.

12. Vehicle with a trim assembly according to one of claims 1, 2, 3, 4, 5, 6, 7, 8, 9 or 10 or vehicle according to claim 11, **characterised in that** the at least one trim part (1) is connected to the chassis (35) of the vehicle by means of the at least first emergency catch device (2).

## Revendications

1. Agencement d'habillage comprenant au moins un premier dispositif de capture d'urgence (2) avec un premier support (8), avec au moins un élément d'habillage (1) pour un véhicule, dans lequel l'élément d'habillage présente au moins un dispositif de support et peut être couplé par l'intermédiaire du au moins un dispositif de palier à un châssis (35) du véhicule, dans lequel le au moins premier dispositif de capture d'urgence (2) présente au moins un premier boulon de capture (11) qui présente une tête de vis avec une surface de contact (18) tournée vers le au moins un élément d'affichage (1) et au moins une première entretoise (19), et dans lequel le au moins premier boulon de capture (11) et la au moins une première entretoise (19) sont reliés au premier support (8), dans lequel le au moins un élément d'habillage (1) est suspendu au châssis (36) par l'intermédiaire de la surface de contact (18) lorsque l'élément d'habillage (1) est agencé sur une face inférieure du châssis (35) et le au moins un dispositif de support est défaillant ou desserré.

2. Agencement d'habillage selon la revendication 1, **caractérisé en ce que** le au moins un élément d'habillage (1) présente au moins un premier volet (26).

3. Agencement d'habillage selon la revendication 2, **caractérisé en ce que** le au moins un premier volet (26), lorsque l'élément d'habillage (1) est agencé sur une face inférieure du châssis (35), est monté rotatif autour d'un premier axe (29) s'étendant de manière parallèle à l'axe longitudinal de châssis(28) du véhicule.

4. Agencement d'habillage selon l'une quelconque des revendications 1, 2 ou 3, **caractérisé en ce que** le au moins premier dispositif de capture d'urgence (2) est relié au au moins un élément d'habillage (1).

5. Agencement d'habillage selon l'une quelconque des revendications 1, 2 ou 3, **caractérisé en ce que** le au moins premier dispositif de capture d'urgence (2) est réalisé de manière à pouvoir être couplé avec le au moins un élément d'habillage (1) au moyen d'au moins une première attache(31), agencée sur le au moins un élément d'habillage (1).

6. Agencement d'habillage selon la revendication 5, **caractérisé en ce que** la au moins une première attache (31) présente un premier loquet (33).

7. Agencement d'habillage selon la revendication 5, **caractérisé en ce que** la au moins une première attache (31) est réalisée sous la forme d'un verrou à boulon avec un boulon de verrouillage.

8. Agencement d'habillage selon la revendication 5, 6 ou 7, **caractérisé en ce que** le premier support (8) présente au moins une première nervure d'attache (34).

9. Agencement d'habillage selon la revendication 5, 6, 7 ou 8, **caractérisé en ce que** le au moins un élément d'habillage (1) présente une ouverture dans la zone de la au moins une première attache (31).

10. Agencement d'habillage selon l'une quelconque des revendications 1, 2, 3, 4, 5, 6, 7, 8 ou 9, **caractérisé en ce que** la au moins la première entretoise (19) est réalisée sous la forme d'un tampon élastique.

11. Véhicule avec un agencement d'habillage selon l'une quelconque des revendications 1, 2, 3, 4, 5, 6, 7, 8, 9 ou 10, **caractérisé en ce que** le au moins un élément d'habillage (1) est relié à un châssis (35) du véhicule au moyen du au moins un dispositif de support.

12. Véhicule avec un agencement d'habillage selon l'une quelconque des revendications 1, 2, 3, 4, 5, 6, 7, 8, 9 ou 10 ou véhicule selon la revendication 11, **caractérisé en ce que** le au moins un élément d'habillage (1) est relié au châssis (35) du véhicule au moyen du au moins premier dispositif de capture d'urgence (2).
